Europäisches Patentamt

European Patent Office

Office européen des brevets

(11) Publication number: **0 223 582**
**A2**

# EUROPEAN PATENT APPLICATION

(21) Application number: **86308945.4**

(22) Date of filing: **17.11.86**

(51) Int. Cl.⁴: **B 60 R 22/24**

(30) Priority: **22.11.85 GB 8528813**
**11.02.86 GB 8603318**

(43) Date of publication of application:
**27.05.87 Bulletin 87/22**

(84) Designated Contracting States: **DE FR GB**

(71) Applicant: **BRITAX (WINGARD) LIMITED**
**Chandler Road**
**Chichester West Sussex PO19 2UG (GB)**

(72) Inventor: **Else, Robert Frederick**
**49 Summerfields**
**Locks Heath nr Southampton Hampshire (GB)**

**Lay, Michael John**
**1 Willow Gardens Westbourne**
**Emsworth Hampshire PO10 8TX (GB)**

(74) Representative: **Hollinghurst, Antony**
**Britax Limited Patent Department Kingsham Road**
**Chichester West Sussex PO19 2UG (GB)**

(54) Safety belt shoulder anchorage.

(57) A motor vehicle safety belt system has a strap (10) arranged use extend from the user's shoulder, via an anchorage assembly, on to a retractor mounted below the anchorage assembly. The anchorage assembly comprises a support member (26) non-pivotally secured to the vehicle body and a guide member (14) containing a slot (34) and mounted for angular movement between a first position in which the slot (34) is perpendicular to the portion of the strap (10) extending therefrom to the retractor and a second position in which an abutment surface thereon engages with the support member (26) so that the support member (26) is on the opposite side of the abutment surface to the slot (34). The guide member (14) is spring biased into its first position.

FIG.1.

EP 0 223 582 A2

**Description**

SAFETY BELT SHOULDER ANCHORAGE

This invention relates to a safety belt shoulder anchorage for a motor vehicle including a strap arranged, in use, to extend from the user's shoulder and then on to a retractor mounted below an anchorage assembly, the anchorage assembly being of the type comprising a support member non-pivotally secured to the vehicle body, a guide member containing a slot for receiving the strap and mounted for angular movement between a first position in which the slot is perpendicular to the portion of the strap extending therefrom to the retractor and a second position in which the slot is perpendicular to an orientation between the part of the strap extending towards the retractor and the part of the strap extending towards the shoulder of the user when the belt is in use. Pivoting anchorages of this type are disclosed in Patent Specifications GB-A-1433279 and GB-A-1509296.

The angular movement of the guide member is intended to facilitate free movement of the strap through the slot, without any tendency to "bunch" at one end of the slot, both when the safety belt is in use and when it is stowed. However, the guide member has to be sufficiently strong to withstand the loads imposed thereon by the belt during an accident and is therefore relatively heavy. In practice, the weight and inertia of the guide member are sometimes sufficient to resist rapid pivoting, with the result that bunching of the belt takes place. This problem is particularly acute where the distance between the pivot axis and the slot is small and where the angle trough which the guide member is required to pivot is relatively large.

EP-A-0142986 discloses a shoulder anchorage in which the guide member is adapted to be rigidly secured to the vehicle body and which is arranged to prevent bunching of the strap in the slot thereof. However, it is necessary for the length of the slot to be such that the rear end thereof is behind the rear edge of that part of the strap which extends from the guide member to the retractor while the front end thereof is in front of the front edge of that part of the strap which extends from the guide member to the shoulder of the user, in use. Consequently the guide member is considerably wider than the strap.

According to the invention, in a safety belt system of the type having a movable guide member as described above, the guide member has an external abutment surface adjacent to the side of the slot engaged by the strap, a support member is non-pivotally secured to the vehicle body so as to engage with the abutment surface when the guide member is in its second position, and the guide member is biased into its first position.

Preferably, the abutment surface of the guide member is parallel to the slot and engages with the support member along the entire length of the slot. Consequently, the entire load-bearing part of the guide member is directly supported by the support member and the only significant load imposed on the guide member by the strap is a compressive load.

The guide member can therefore be formed of a plastics material.

A spring may be provided to bias the guide member into its first position. Alternatively, the pivotal mounting of the guide member may be so positioned that such biasing is effected by gravity.

The support member may be formed with an aperture and the abutment surface of the guide member arranged to engage with an edge of the aperture when in its second position. This permits support of both ends of the part of the support member which is engaged by the abutment surface of the guide member.

In one form of the invention, the abutment surface is of arcuate shape centered on the axis about which the guide member is movable between its first and second positions, the support member having a complementary arcuate surface which remains in close proximity to the abutment surface during said angular movements.

In another form of the invention, the guide member is mounted for angular movement about an axis located adjacent to one end of the abutment surface.

The anchorage assembly may be directly mounted on a structural member of the vehicle body. Alternatively, the anchorage assembly may be mounted on a carriage which is vertically movable relative to the vehicle body so as to permit height adjustment. In both cases, the support member is so mounted as to prevent changes in its orientation relative to the pivot for the tied member.

Embodiments of the invention will now be described, by way of example, with reference to the accompanying drawings, in which:-

Figure 1 is a schematic side elevation view of a shoulder anchorage in accordance with the invention, in its position of normal use;

Figure 2 is a cross-sectional view taken on the line 2 - 2 in Figure 1;

Figure 3 is a side elevational view, similar to Figure 1 but showing the anchorage with the belt in the stowed position;

Figure 4 is a cross-sectional view taken on the line 4 - 4 in Figure 3;

Figure 5 is a cross-sectional view, similar to Figure 2 of a second embodiment of the invention;

Figure 6 is a schematic plan view of the embodiment shown in Figure 5;

Figures 7 and 8 are side elevational views, similar to Figures 1 and 3 respectively, of a third embodiment of the invention;

Figure 9 is a side elevational view of a third embodiment of the invention, showing the guide member in the position it occupies when the belt is stowed;

Figure 10 is a cross-sectional view taken on the line 10 - 10 in Figure 9;

Figure 11 is a perspective view of the guide member of the embodiment shown in Figures 9 and 10;

Figure 12 is a side elevational view, similar to Figure 9 but showing the guide member in the position it occupies when the belt is in use;

Figure 13 is a side elevational view of a fourth embodiment of the invention, showing the guide member in the position it occupies when the belt is stowed;

Figure 14 is a cross-sectional view taken on the line 14 - 14 in Figure 13;

Figure 15 gives a perspective view of the guide member of the embodiment shown in Figures 13 and 14;

Figure 16 is a side elevational view, similar to Figure 13 but showing the guide member in the position it occupies when the belt is in use;

Figure 17 is a side elevational view of the fifth embodiment of the invention;

Figure 18 is a cross-sectional view taken on the line 18 - 18 in Figure 17;

Figure 19 is a side elevational view of a sixth embodiment of the invention;

Figure 20 is a partially broken away plan view from below of the guide member of the embodiment shown in Figure 19.

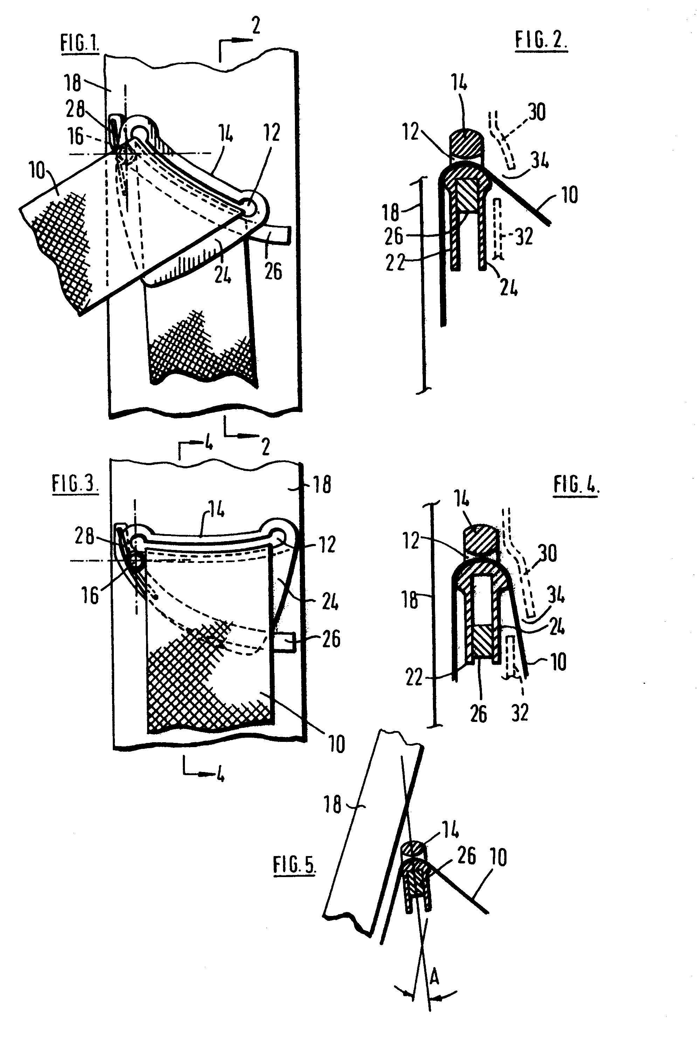

Figure 1 shows the shoulder strap 10 of a vehicle safety belt running through a slot 12 in a belt guide member 14. The guide member 14 is pivotally mounted on a stud 16 which is secured to the B-post 18 of a motor car. As can be seen from Figure 2, the guide member 14 has two downwardly extending side limbs 22 and 24 straddling a support member 26 which is rigidly mounted on the B-post 18 at a location adjacent to the stud 16. The guide member 14 is resiliently biased away from the support member 26 by a spring 28.

In use, when the safety belt is being worn, the tension in the strap 10 is sufficient to overcome the bias exerted by the spring 28 with the result that the guide member 14 rests on the support member 26. The support member 26, which is not pivotally mounted, thus takes the loads imposed by the strap 10 and the stud 16 can consequently be of relatively light construction. On the other hand, when the safety belt is stowed, the strap 10 hangs parallel to the B-post 18 as shown in Figure 3 and the spring 28 is of sufficient strength to move the slot 12 to a generally horizontal position. As can be seen from Figure 4, the length of the side limbs 22 and 24 is such that the support member 26 remains therebetween with the result that the guide member 14 is retained in alignment therewith.

Since the movable guide member 14 is of relatively light construction, the force exerted by the spring 28 can be arranged to be less than the force which would be required to cause the webbing of the strap 10 to bunch in the slot 12.

In the embodiment illustrated in Figures 1 to 4, the slot 14 and the bar 26 are illustrated as being curved, this curved shape further reducing any tendency of the strap 10 to bunch at one end of the slot. However, this does have the effect of causing a greater load to be applied to the edges of the strap 10 as compared with that applied to the central region thereof. If preferred, this differential load can be avoided by using a straight slot in place of the slot 14, in which case a straight support member is used in place of the support member 26.

As can be seen from Figures 2 and 4, the entire assembly may be concealed behind the vehicle trim 30, 32 with the strap 10 emerging through a slot 34 therein.

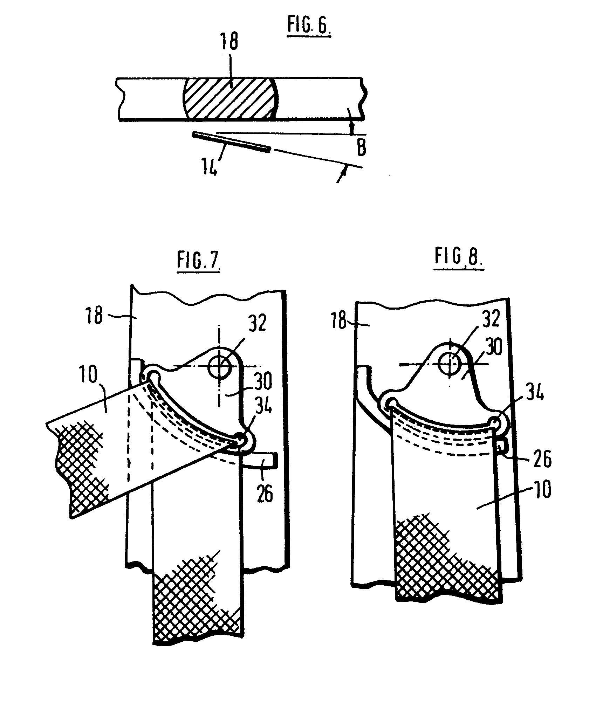

Referring to Figure 5, the assembly comprising the guide member 14 and the support member 26 may be mounted with its centre line inclined at an angle A to the B-post 18 such that it bisects the angle between the part of the strap 10 extending between the guide member 14 and the user's shoulder and the part thereof extending parallel to the B-post 10. Similarly, as shown in Figure 6, the guide member 14 and the support member 26 (not shown in Figure 6) may be inclined at a horizontal angle B to the longitudinal axis of the vehicle so as to be perpendicular to the plane containing the centre line of the strap 10 on each side of the slot 14.

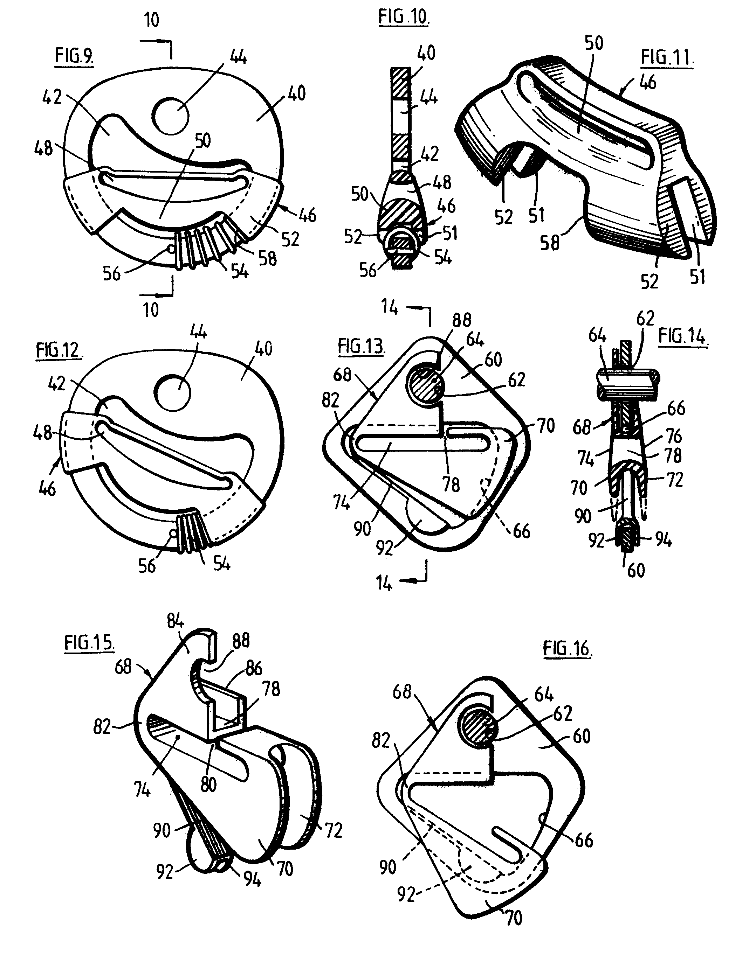

Figures 7 and 8 illustrate an alternative embodiment of the invention having a support member 26 mounted on the B-post 18 as before. However, in place of the guide member 14, an alternative guide member 30 is pivotally mounted on a stub axle 32 located above the guide member 36 and positioned symmetrically with respect to the slot 34 in the support member 30. The effect of this is that, when the safety belt is in its stowed condition, the weight of the guide member 30 and the strap 10 pulls the guide member 30 into the position illustrated in Figure 8, no biasing spring being necessary. However, it takes up rather more space above the level at which the strap 10 passes through the slot 34.

Figures 9 to 12 illustrate a further embodiment of the invention which differs from the embodiments previously described in that its support member 40 comprises a plate having a crescent-shaped aperture 42 located with its concave side facing upwards. The support member 40 also has a hole 44 for receiving a bolt attached to a structural member of a vehicle body.

A guide member 46, having a slot 48 for a safety belt is located with its main body portion 50 within the aperture 42 and with respective side limbs 51 and 52 projecting on each side of the mounting member 40 below the aperture 42. The central region of each of the side limbs 51 and 52 is cut away to accommodate a compression spring 54 which engages between a peg 56 on the mounting member 40 and an abutment face 58 at one end of the cut away part of the side limbs 51 and 52.

In use the spring 54 biases the guide member 46 to its first position at the right hand end of the aperture 42 as viewed in Figure 9, the safety belt (not shown) being in its stowed condition. When the safety belt is being worn, it pulls the guide member 46 to the left, sliding it along the concave bottom edge of the aperture 42 and compressing the spring 54, as shown in Figure 12.

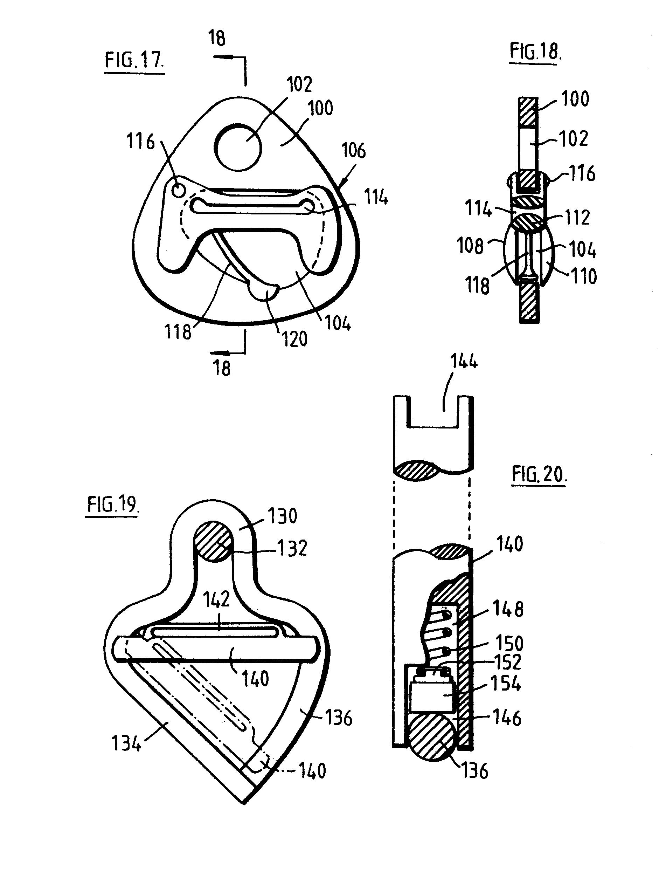

Turning now to Figures 13 to 16, a support member 60 takes the form of a plate which has a hole 62 arranged to receive a bolt 64 (Figure 14) for securing it to a vehicle body. The support member 60 also has a triangular aperture 66 in which a guide member 68 is located. As can best be seen from Figure 15, the guide member 68, which is formed of resilient plastics material and has two mutually parallel side walls 70 and 72 each of which has a slot 74, 76, the two side walls 70 and 72 being joined together by a flange 78 which extends around the peripharies of the two slots 74 and 76. An opening 78 extends upwardly from an intermediate point along the top edge of the slots 74 and 76 through the side walls and the flange 78. The slots 74 and 76 extend into close promixity with the left hand end of the guide member 68 (as viewed in Figures 13 and 15) so as to leave a thin layer of material which serves as a hinge formation 80 permitting the lower part of the guide member 68 to pivot relative to the upper part.

The guide member 68 is fitted into the triangular aperture 66 in the support member 60 with the upper surface of the flange 78 abutting against the top edge of the aperture 66. Between the opening 80 and the hinge formation 82, the side walls 70 and 72 have respective upwardly extending projections 84 and 86 between which the upper part of the support member 60 is located. The projection 84 on the side wall 70 extends above the hole 62 and has a part-circular opening 88 in alignment therewith so as to engage with the bolt 64 and retain the projection 84 at a substantially fixed orientation relative to the support member 60.

An integrally formed spring arm 90 projects from the hinge formation 82 so as to engage with the bottom edge of the aperture 66, a pair of flanges 92 and 94 on respective sides of its free end engaging round the guide member 60.

In use, when the safety belt is in its stowed position, the guide member is in the orientation illustrated in Figure 13. If a downward force is applied to the safety belt, for example as when the safety belt is worn, the bottom part of the guide member 68 pivots downwardly relative to its top part about the hinge formation 82 against the action of the spring arm 90, as shown in Figure 16.

Figures 17 and 18 illustrate a modification of the embodiment of Figures 13 to 16 having a support member 100 with a hole 102 whereby it may be bolted to a vehicle body and a generally triangular aperture 104. A guide member 106 consists of two side walls 108 and 110 interconnected by a flange 112 which extends around the periphery of slots 114 therein. However, instead of having an integral hinge formation, the guide member 106 is secured to the support member 100 by a pivot pin 116. A spring arm 118 similar to the spring arm 90 of Figures 13 to 15 extends from a location on the guide member 106 adjacent to the end of the slot 114 nearer to the pivot pin 116. The spring arm 118 has flanges 120 on its free end which engage on respective sides of the support member 100. The method of operation is similar to that of the embodiment of Figures 13 to 15.

Figures 19 and 20 illustrate a further embodiment in which the support member 130 consists of a wire loop having an upper portion shaped to engage round a bolt 132 and a lower portion which is of generally triangular shape having one straight side 134 and one arcuate side 136, the centre of the arc being located slightly above the upper end of the side 134 so that the distance between the upper ends of the sides 134 and 136 is slightly greater than the legth of the side 134.

The guide member comprises a bar 140 having a loop 142 defining a slot 142 formed on its upper side. At one end, the bar 140 has a bifurcated formation 144 which engages around the support member 130 adjacent to the upper end of the side 134. At its other end, the bar 140 has a bifurcated formation 146 with a bore 148 at its inner end. The bore 148 accommodates a compression spring 150 which engages with a pusher member 152. The member 152 in turn engages with a roller 154 which presses against the arcuate side 136 of the support member 130. Because of the shape of the arcuate side 136, the spring 150 tends to push the guide member 140 to the uppermost position illustrated in solid lines in Figure 19 but it can move downwardly to the position illustrated in chain-dotted lines, thereby compressing the spring 150. The manner of operation is similar to that previously described.

With any embodiment of the invention, the guide member and support member may be mounted on the carriage of a height-adjustable shoulder anchorage arrangement, for example as described in EP-A-0126578. Alternatively or additionally, the support member 26 may be mounted on means permitting a small amount of articulation to allow it to line up with the load vector imposed by the strap 10 during an accident.

**Claims**

1. A safety belt shoulder anchorage for a motor vehicle including a strap (10) arranged, in use, to extend from the user's shoulder and then on to a retractor mounted below the anchorage assembly, the anchorage assembly comprising a support member (26, 40, 60, 100, 130) non-pivotally secured to the vehicle body, a guide member (14, 30, 46, 68, 106, 140) containing a slot (34, 48, 74, 76, 114, 142) and mounted for angular movement between a first position in which the slot (34, 48, 74, 76, 114, 142) is perpendicular to the portion of the strap (10) extending therefrom to the retractor and a second position in which the slot (34, 48, 74, 76, 114, 142) is perpendicular to an orientation between the part of the strap (10) extending towards the retractor and the part of the strap (10) extending towards the shoulder of the user when the belt is in use, characterised in that the guide member (14, 30, 46, 68, 106, 140) has an external abutment surface adjacent to the side of the slot (34, 48, 74, 76, 114, 142) engaged by the strap (10), a support member (26, 40, 60, 100, 130) is non-pivotally secured to the vehicle body so as to engage with the abutment surface when the guide member (14, 30, 46, 68, 106, 140) is in its second position, the guide member (14, 30, 46, 68, 106, 140) being biased into its first position.

2. An anchorage assembly according to claim 1, wherein the abutment surface of the guide member (14, 68, 106, 140) is parallel to the slot (34, 74, 76, 114, 142) and engages with the support member (26, 60, 100, 130) along the entire length of the slot (34, 74, 76, 114, 142).

3. An anchorage assembly according to claim 1 or 2, wherein the guide member (14, 46, 68, 106, 140) is biased into its first position by a spring (28, 54, 90, 118, 150).

4. An anchorage assembly according to claim 1 or 2, wherein the pivotal mounting of the guide member (30) is positioned so that the guide member (30 is biased into its first position by gravity.

5. An anchorage assembly according to any preceding claim, wherein the support member (40, 60, 100, 130) is formed with an aperture (42, 66, 104) and the abutment surface of the guide member (46, 68, 106, 140) arranged to engage with an edge of the aperture when in its second position.

6. An anchorage assembly according to any preceding claim, wherein the abutment surface is of arcuate shape centered on the axis about which the guide member (30, 46) is movable between its first and second positions, the support member (26, 40) having a complementary arcuate surface which remains in close proximity to the abutment surface during said angular movements.

7. An anchorage assembly according to claim 1 or 2, wherein the guide member (14, 68, 106, 140) is mounted for angular movement about an axis located adjacent to one end of the abutment surface.

8. An anchorage assembly according to any preceding claim, wherein the anchorage assembly is directly mounted on a structural member of the vehicle body.

9. An anchorage assembly according to any of claims 1 to 7, wherein the anchorage assembly is mounted on a carriage which is vertically movable relative to the vehicle body so as to permit height adjustment.

FIG.1.

FIG.2.

FIG.3.

FIG.4.

FIG.5.

0223582

0223582

FIG. 6.

FIG. 7.

FIG 8.

0223582

FIG.9.

FIG.10.

FIG.11.

FIG.12.

FIG.13.

FIG.14.

FIG.15.

FIG.16.

FIG.17.

FIG.18.

FIG.19.

FIG.20.